# EUROPEAN PATENT SPECIFICATION

(11) **EP 0 272 806 B1**
(45) Date of publication and mention of the grant of the patent: **16.03.1994**
(21) Application number: 87310369.1
(22) Date of filing: 25.11.1987
(51) Int. Cl.: H02G 15/10, H02G 15/105

(54) **Inner enclosure of an electrical cable connection**
Innenumhüllung einer Verbindung elektrischer Kabel
Enveloppe intérieure d'une connexion de câbles électriques

(30) Priority: 18.12.1986 DE 3643249
(43) Date of publication of application: 29.06.1988
(73) Proprietor: MINNESOTA MINING AND MANUFACTURING COMPANY, St. Paul, Minnesota 55133-3427 (US)
(72) Inventor: Klotz, Ulrich c/o 3M Laboratories (Europe) GmbH, D-2102 Hamburg 93 (DE)
(74) Representative: Baillie, Iain Cameron

(56) References cited:
- EP-A- 0 194 898
- DE-A- 2 712 744
- DE-U- 1 844 052
- FR-E- 92 563
- US-A- 1 723 846
- PATENT JOURNAL OF THE PATENT AND TRADE MARKS OFFICE OF THE REPUBLIC OF SOUTH AFRICA vol. 5, no. 3, March 1972, PRETORIA ; & TR-A-178003

## Description

### Technical Field

The invention relates to a metallic inner enclosure of an electrical cable connection according to the preamble of claim 1.

Electrical cable connections for power current cables often require an inner enclosure which shall form a container, for instance for cable impregnation mass, and an electrical shield and thus is made of metal mostly. Because of the space demand of a core connections, that inner enclosure must have a relatively large inner diameter, which normally is larger than the outer diameter of the cables, in a central section overlying the connection area. For the connection with the shield layers of the cables, the inner enclosure must have end sections which taper towards the shield layers of the cables, in most cases conically. For reasons of electrical symmetry, the inner enclosure normally is designed as a tube having circular cross-sections. It is not easy to manufacture the described structure including the central section and the subsequent outwardly tapering end sections at the site of application. Normally, the described metallic inner enclosure is manufactured at the site of application from sheet metal, for instance leaded sheet steel, and the necessary connections are effected by soldering. This mode of operation is intricate and time-consuming and requires great care. For soldering the relatively large structural parts, normally an open flame is necessary; this is undesirable for safety reasons in many applications.

### Background Art

To counteract the aforedescribed difficulties, it is known according to the German disclosure letter 27-12-744 to provide a radially split inner enclosure, the portions of which are prefabricated and are interconnected at the site of application by a plurality of screws, with a gasket being interposed. That, too, is intricate and time-consuming and requires a relatively large number of structural parts; this is very inconvenient in the, often very restricted, space at the site of application.

South African Patent Application ZA-A-70/5750 discloses an inner enclosure for a cable joint, comprising a pair of end parts, each joined to a central connecting sleeve by mating spigot and socket formations which are secured by an adhesive to form a pressure and moisture tight joint between the formations.

It is the object of the present invention to design a metallic inner enclosure for a cable connection of the described kind so that it can be assembled conveniently and rapidly at the site of application and even in a restricted space.

According to the invention, that object is attained with the metallic inner enclosure according to the accompanying claims, Claim 1 of which has been divided into a two part form based on the assumption that ZA-A-70/5750 is the nearest state of the art.

### Disclosure of Invention

The inner enclosure according to the invention is assembled by axial interplugging of only three structural parts. The space which is required in the axial direction for the cable connection and for the assembly of the inner enclosure is held small in that the one end part is moved through the central part into its plug seat. Tile end parts normally have a diameter so small that they can be moved not over the cables but only over the shield layer freed from the cable sheath. Due to the construction in accordance with the invention, only a relatively short length of cable sheath need be removed, whereby the total dimensions of the finished cable connection, which is still provided with an outer enclosure extending from cable sheath to cable sheath, are not to a disturbing extent larger than with the use of inner enclosures which are built together around the connection area in the conventional manner. The axial interplugging can be affected very rapidly. Screws and other small parts are not necessary. The plug connections can be readily designed so that even without the interposition of a smooth gasket, they are tight enough for the application purpose, particularly tight enough to prevent, over at least the time period which is required to assemble the cable connection, the leaking of disturbing amounts of a liquid or semi-liquid, for instance gelled, cable impregnation mass which is present in the inner enclosure. The assembling does not require particular experience or skill, nor are special tools necessary. The application of heat or even an open flame is not necessary. Because of the omission of connecting elements, for instance screws, the weight of the inner enclosure is relatively low. Since the parts from which the inner enclosure is assembled, can be tubes without a longitudinal seam, high strength and low weight can be easily provided in combination.

The inner enclosure according to the invention can be readily held in stock or delivered as a simple construction kit which contains only few parts. Then, all necessary parts are available together at the site of application.

The central part and the end parts may consist in any manner of tubes of sheet metal, metallized plastic or the like, the tubes being seamless or closed in a seam, and require only very little expense for their manufacture. This, and the omission of complicated connecting devices, permits the manufacture of the construction kit at very low costs. Since also the assembly at the site of application requires only low costs for working time, the inner enclosure according to the invention is in total highly superior to the prior constructions also with respect to costs.

### Brief Description of Drawings

The invention will be subsequently described at more detail by means of an embodiment example in connection with the drawings, wherein,
Fig. 1 is a diagrammatic perspective view of a finished inner enclosure during the manufacture of a cable connection;
Fig. 2 illustrates in a diagrammatic perspective exploded view the interplugging of the enclosure according to Fig. 1;
Fig. 3 illustrates a possible embodiment of the plug connections in a diagrammatic perspective partial view which is somewhat enlarged as compared to Figs. 1 and 2; and
Fig. 4 illustrates, in a similar representation as Fig. 1, an embodiment of the enclosure for use in a cable connection between multi-core mass-impregnated cable and single core plastic-insulated cables.

### Detailed Description

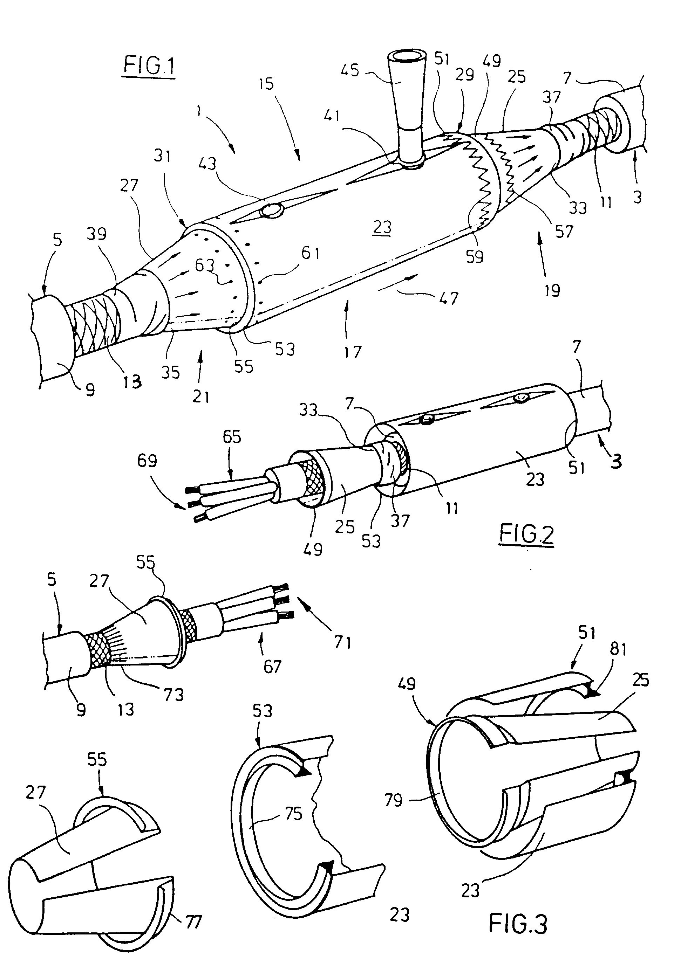

Fig. 1 shown inner constituents of an electrical cable connection 1 between a mass-impregnated cable 3 filled with a cable impregnating mass, and a plastic-insulated cable 5. Of the cables 3 and 5, a set-off insulating cable sheath 7 and 9, respectively, and a shield layer 11 and 13, respectively, can be seen. A metallic inner enclosure 15 extends between the shield layers 11 and 13 and has a tubular central section 17 surrounding the connecting area, the central section having a larger diameter than the cables 3 and 5, and two tubular end sections 19 and 21, respectively, which extend taperingly from the central section 17 to the shield layers 11 and 13, respectively, and are conical in the illustrated case.

The central section 17 is designed as a separate central part 23, and the end sections 19 and 21 are designed as separate first and second end parts 25 and 27, respectively, and are connected with the central part 23 at the ends thereof in plug connections 29 and 31, respectively. The smaller ends 33, 35 of the end parts 25 and 27 are electrically and mechanically connected to the shield layers 11 and 13, respectively, by wrappers 37 and 39, respectively, of electrically conductive tape or the like. Two openings 41 and 43 are provided in the central part 23. Into one of the openings, a cable impregnating mass can be filled through a plugged-on pipe connector 45 into the inner enclosure 15, whereas the other opening serves for venting.

The plug connections 29 and 31 are designed for one and the same plug-in direction 47 of the two end parts 25 and 27 relative to the central part 23. The first plug connection 29 is provided at the larger end 49 of the one end part 25 and at the one end 51 of the central part 23. The one end part 25 is insertable, with its smaller end 33 ahead, through the other end 53, which is illustrated at the left-hand side of Fig. 1, of the central part 23 into the central part, i.e., the larger diameter of the one end part 25 is smaller than the inner diameter of the central part 23 up to the end 51. The second plug connection 31 is provided at the larger end 55 of the other end part 27 and at the other end 53 of the central part 23.

In order to facilitate the interplugging, markings 57, 59, and 61, 63 are provided on the central parts 23 and on the end parts 25 and 27, respectively, which point in an obvious manner to the correct association of the parts and/or to the correct direction of movement relative to the central part 23. In this manner, the illustrated embodiment has arrow-shaped markings on each end part in order to designate the correct direction of movement relative to the central part 23.

Fig. 2 illustrates the manufacture of the inner enclosure represented in Fig. 1. From the two cables 1 and 3 to be interconnected (which in the illustrated case both have three cores), the cable sheaths 7 and 9, respectively, the shield layers 11 and 13, respectively, and core insulators 65 and 67, respectively, have been set-off in the usual manner so as to expose core ends 69, 71.

The central part 23 has been shifted with its narrower one end 51 ahead onto the one cable 3, and thereafter, the one end part 25, which is shiftable through the central part 23, has been shifted, with its smaller end 33 ahead, onto the shield layer 11 of that cable 3 and has been fixed in the desired position by a wrapping 37 of conductive tape or the like.

The other end part 27 has been shifted, with its smaller end 35 ahead, onto the shield layer 13 of the other cable 5. To facilitate the shifting-on, feathered end areas are provided at the smaller ends of the end parts. In Fig. 2, only the feathered end area 73 of the end part 27 can be seen.

It can be readily recognized from Fig. 2 how the assembly proceeds further: The core ends 69 and 71 are interconnected in the usual manner, and then the central part 23 is shifted leftwards, in the sense of Fig. 2, until the plug connection 29 (Fig. 1) is closed between the ends 49 and 51. Thereafter, the other end part 27 is shifted rightwards, in the sense of Fig. 2, until the plug connection 31 (Fig. 1) is closed between the ends 53 and 55. Thereafter, also the end part 27 can be fixed by a wrapping 39 (Fig. 1) of conductive tape.

Fig. 3 illustrates a representation which is somewhat enlarged as compared to Fig. 2, possible embodiments of the plug connections 29 and 31, which in this case are formed by unitarily formed profiles 75, 77 and 79, 81, respectively. This facilitates the manufacture. In the illustrated embodiment, the inner enclosure consists of sheet metal, and the plug connections are designed in the manner of tin can-lid plug connections. To this end, the co-operating ends of the parts are correspondingly curled and/or folded.

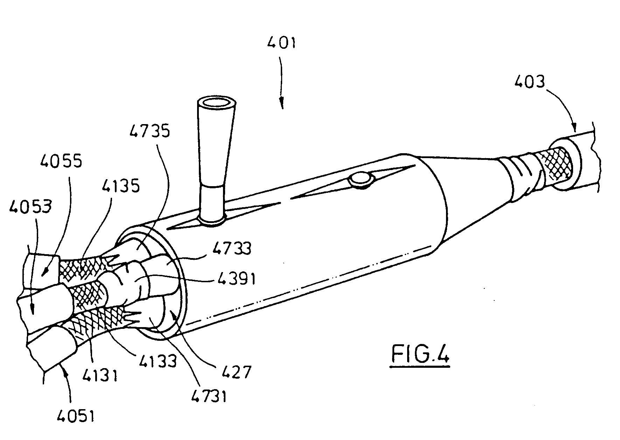

Fig. 4 illustrates, in a representation similar to Fig. 1, an embodiment of a cable connection 401 between a three core mass-impregnated cable 403 and three single core plastic-insulated cables 4051, 4053 and 4055 which comprise shield layers 4131, 4133, 4135. Accordingly, the associated end part 427 tapers into three conical end areas 4731, 4733, and 4735. Fig. 4 illustrates a stage of the assembly in which the end area 4733 has been already fixed with a wrapping 4391 of sealing and electrically conductive tape to the shield layer 4133 of the respective single core cable 4053, whereas the other end areas 4731 and 4735 are still without wrappers so that their feathered free ends can be seen.

In other respects, reference is made to the above description of Figs. 1 and 2 for describing the Figs. 3 and 4 with the aid of the reference numerals indicated there.

## Claims

1. Metallic inner enlcosure of an electrical cable connection, comprising a tubular central section (17) which surrounds the connection area and has a larger diameter than the cables (3,5), and two conical end sections (19, 21) which extend taperingly from the central section (17) to shield layers (11, 13) of the cables;
wherein said central section (17) is designed as a separate central part (23) and said end sections (19, 21) are respectively designed one as a first end part (25) and the other as a second end part (27) both separate from said tubular central section (17);
said first end part (25) being introducable, with its smaller end (33) ahead, into one end (53) of said central part (23) and through the other end (51) of the central part (23) to make a first mechanical plug connection (29) adjacent or cooperating with said other end (51) of said central part (23) by means of a profile (79) at the larger end (49) of said first end part (25), said profile (79) engaging a profile (81) adjacent or cooperating with said other end (51) of the central part (23), said first mechanical plug connection being effective in the direction (47) of introduction of said first end part (25) into said central part (23); and wherein
said second end part (27) makes a mechanical connection at its larger end (55) with said one end (53) of said central part (23) effective in said direction of introduction (47), with the smaller end (35) of said second end part (27) facing away from said central part (23);
**characterized in that**
said profile (79) of said first end part (25) extends from the large conical end of said first end part (25) to seal with said profile (81) which is formed at said other end (51) of said central part (23);
said second end part (27) has a radially outwardly directed profile (77) at its larger end (55);
said one end (53) of said central part (23) has an inwardly directed profile (75);
the outwardly directed profile (77) on said second end part (27) makes a second mechanical plug connection (31) with the inwardly directed profile (75) on said one end (53) of said central part (23); and that
both mechanical plug connections (29, 31) are tight enough to prevent, over at least the time period which is required to assemble the cable connection, the leaking of disturbing amounts of a liquid or semi-liquid cable impregnation mass from said inner enclosure.

2. Inner enclosure according to Claim 1, characterized in that the central part (23) comprises at least one filling opening (41).

3. Inner enclosure according to Claim 2, characterized in that the central part (23) furthermore comprises at least one vent opening (43).

4. Inner enclosure according to any one of the preceding claims, characterized in that the smaller ends (35) of the end parts (27) comprise feathered end areas (73, Fig. 2) for enclosing a shield layer (13) of the associated cable (5).

5. Inner enclosure according to any one of the preceding claims, characterized in that the central part (23) and at least one of the end parts (25, 27) comprise markings (57, 59, 61, 63) for designating the associated parts.

6. Inner enclosure according to any one of the preceding claims, characterized in that the mechanical plug connections (29, 31) are designed in the manner of tin can lid plug connections.

7. Inner enclosure according to any one of the preceding claims, characterized in that the plug connections are formed by unitarily formed profiles (75, 77, 79, 81; Fig. 3).

## Patentansprüche

1. Metallische Innenumhüllung einer Verbindung elektrischer Kabel, mit einem röhrenförmigen Mittelteilstück (17), welches die Verbindungsfläche umgibt und welches einen größeren Durchmesser als die Kabel (3, 5) aufweist und mit zwei konischen Endteilstücken (19, 21), welche sich konisch zulaufend von dem Mittelteilstück (17) zu den Abschirmschichten (11, 13) der Kabel erstrecken;
wobei das genannte Mittelteilstück (17) als ein separates Mittelstück (23) gestaltet ist und wobei von den genannten Endteilstücken (19, 21) entsprechend das eine als ein erstes Endstück (25) und das andere als ein zweites Endstück (27) gestaltet ist, wobei beide von dem röhrenförmigen Mittelteilstück (17) getrennt sind;
wobei das erste Endstück (25) mit dessen kleinerem Ende voraus in ein Ende (53) des Mittelstücks (23) und durch das andere Ende (51) des Mittelstücks (23) einführbar ist, um anstoßend an oder zusammenwirkend mit dem anderen Ende (51) des Mittelstücks (23) eine erste mechanische Steckverbindung (29) herzustellen, und zwar durch ein Profil (79) an dem größeren Ende (49) des ersten Endstücks (25), wobei das genannte Profil (79) mit einem Profil (81) eingreift, und zwar anstoßend an oder zusammenwirkend mit dem genannten anderen Ende (51) des Mittelstücks (23), wobei die genannte erste mechanische Steckverbindung in Richtung (47) der Einführung des genannten ersten Endstücks (25) in das genannte Mittelstück (23) wirksam ist; und wobei
das genannte zweite Endstück (27) an dessen größerem Ende eine mechanische Verbindung mit dem genannten anderen Ende (53) des genannten Mittelstücks (23) herstellt, welche in Richtung der Einführung (47) wirksam ist, wobei das kleinere Ende (35) des genannten zweiten Endstücks (27) von dem genannten Mittelstück (23) weg zeigt;
**dadurch gekennzeichnet, dass:**
sich das Profil (79) des ersten Endstücks (25) von dem großen konischen Ende des ersten Endstücks (25) erstreckt, um mit dem genannten, an dem genannten anderen Ende (51) ausgebildeten Profil (81), abzudichten;
das genannte zweite Endstück (27) an dessen größerem Ende (55) ein radial auswärts ausgerichtetes Profil (77) aufweist;
das genannte eine Ende (53) des genannten Mittelstücks (23) ein einwärts gerichtetes Profil (75) aufweist;
das auswärts gerichtete Profil (77) an dem genannten zweiten Endstück (27) an dem genannten einen Ende (53) des genannten Mittelstücks (23) eine zweite mechanische Steckverbindung (31) mit dem einwärts gerichteten Profil (75) herstellt; und daß
beide mechanischen Steckverbindungen (29, 31) dicht genug sind, um mindestens während der zum Zusammenbau der Kabelverbindung notwendigen Zeitdauer ein Auslaufen störender Mengen einer flüssigen oder halbflüssigen Kabelimprägniermasse aus der genannten Innenumhüllung zu vermeiden.

2. Innenumhüllung nach Anspruch 1, dadurch gekennzeichnet, daß das Mittelstück (23) mindestens eine Füllöffnung (41) umfaßt.

3. Innenumhüllung nach Anspruch 2, dadurch gekennzeichnet, daß das Mittelstück (23) ferner mindestens eine Entlüftungsöffnung (43) umfaßt.

4. Innenumhüllung nach einem der vorstehenden Ansprüche, dadurch gekennzeichnet, daß die kleineren Enden (35) der Endstücke (27) gefederte Endbereiche (73, Fig. 2) umfassen, um eine Abschirmschicht (13) des zugeordneten Kabels (5) zu umhüllen.

5. Innenumhüllung nach einem der vorstehenden Ansprüche, dadurch gekennzeichnet, daß das Mittelstück (23) und mindestens eines der Endstücke (25, 27) Markierungen (57, 59, 61, 63) zur Bezeichnung der zugeordneten Teile umfassen.

6. Innenumhüllung nach einem der vorstehenden Ansprüche, dadurch gekennzeichnet, daß die mechanischen Steckverbindungen (29, 31) auf die Art und Weise von Blechdosendeckelsteckverbindungen gestaltet sind.

7. Innenumhüllung nach einem der vorstehenden Ansprüche, dadurch gekennzeichnet, daß die Steckverbindungen durch einheitlich ausgebildete Profile (75, 77, 79, 81; Fig. 3) gestaltet sind.

## Revendications

1. Enveloppe interne métallique d'une connexion de câbles électriques, comprenant un tronçon central tubulaire (17), qui entoure la zone de connexion et qui présente un diamètre supérieur à celui des câbles (3, 5), et deux tronçons d'extrémité coniques (19, 21) qui s'étendent de façon effilée depuis le tronçon central (17) jusqu'aux couches d'écran (11, 13) des câbles,
dans lequel le tronçon central (17) est conçu sous la forme d'un élément central séparé (23) et les tronçons d'extrémité (19, 21) sont respectivement conçus l'un en tant qu'un premier élément d'extrémité (25) et l'autre en tant qu'un second élément d'extrémité (27), tous deux étant séparés par le tronçon central tubulaire (17),
le premier élément d'extrémité (25) pouvant être introduit, avec son extrémité la plus petite en avant, dans une extrémité (53) de l'élément central (23) et à travers l'autre extrémité (51) de l'élément central (23) pour réaliser une première connexion mécanique à enfichage (29) contiguë à ou coopérant avec l'autre extrémité (51) de l'élément central (23) au moyen d'un profilé (79) à l'extrémité la plus grande (49) du premier élément d'extrémité (25), le profilé (79) étant en prise avec un profilé (81) contigu à ou coopérant avec l'autre extrémité (51) de l'élément central (23), la première connexion mécanique à enfichage étant effective dans le sens (47) d'introduction du premier élément d'extrémité (25) dans l'élément central (23), et
dans lequel le second élément d'extrémité (27) réalise, à son extrémité la plus grande, avec une des extrémités (53) de l'élément central (23) une connexion mécanique effective dans le sens d'introduction (47), l'extrémité la plus petite (35) du second élément d'extrémité (27) faisant face à l'opposé de l'élément central (23),
caractérisée en ce que
le profilé (79) du premier élément d'extrémité (25) s'étend depuis la grande extrémité conique du premier élément d'extrémité (25) pour être scellé au profilé (81) qui est formé à l'autre extrémité (51),
le second élément d'extrémité (27) présente à son extrémité la plus grande (55) un profilé (77) dirigé radialement vers l'extérieur,
l'une des extrémités (53) de l'élément central (23) présente un profilé (75) dirigé vers l'intérieur,
le profilé (77) dirigé vers l'extérieur, du second élément d'extrémité (27) réalise une seconde connexion mécanique à enfichage (31) avec le profité (75), dirigé vers l'intérieur, de l'une des extrémités (53) de l'élément central (23), et
les deux connexions mécaniques à enfichage (29, 31) sont suffisamment étanches pour empêcher pendant au moins la période de temps qui est nécessaire pour assembler la connexion de câbles, la fuite de quantités gênantes d'une masse liquide ou semi-liquide d'imprégnation de câble depuis l'enveloppe interne.

2. Enveloppe interne suivant la revendication 1, caractérisée en ce que l'élément central (23) comporte au moins une ouverture de remplissage (41).

3. Enveloppe interne suivant la revendication 2, caractérisée en ce que l'élément central (23) comporte en outre au moins une ouverture d'évent (43).

4. Enveloppe interne suivant l'une quelconque des revendications précédentes, caractérisée en ce que les extrémités les plus petites (35) des éléments d'extrémité (27) comprennent des zones d'extrémité nervurées (73, figure 2) pour enfermer une couche d'écran (13) du câble adjoint (5).

5. Enveloppe interne suivant l'une quelconque des revendications précédentes, caractérisée en ce que l'élément central (23) et au moins un des éléments d'extrémité (25, 27) comprennent des marques (57, 59, 61, 63) pour indiquer les éléments associés.

6. Enveloppe interne suivant l'une quelconque des revendications précédentes, caractérisée en ce que les connexions mécaniques à enfichage (29, 31) sont conçues à la manière de connexions à enfichage de couvercle de boîte à conserve.

7. Enveloppe interne suivant l'une quelconque des revendications précédentes, caractérisée en ce que les connexions à enfichage sont formées par des profilés façonnés de façon unitaire (75, 77, 79, 81 ; figure 3).
